**Europäisches Patentamt**

**European Patent Office**

**Office européen des brevets**

(19)

(11) Publication number: **0 170 212**
**A2**

(12) **EUROPEAN PATENT APPLICATION**

(21) Application number: **85109353.4**

(22) Date of filing: **25.07.85**

(51) Int. Cl.⁴: **C 04 B 20/06**
**C 04 B 18/02, C 04 B 18/04**

(30) Priority: **30.07.84 CH 3685/84**
**30.07.84 CH 3686/84**

(43) Date of publication of application:
**05.02.86 Bulletin 86/6**

(84) Designated Contracting States:
**AT BE DE FR GB IT NL SE**

(71) Applicant: **JAROMIR AKTIENGESELLSCHAFT**
**Staedtle 36**
**Vaduz(LI)**

(72) Inventor: **Ritter, Karlheinz**
**Staedtle 36**
**Vaduz(LI)**

(74) Representative: **Marietti, Giuseppe**
**CENTRO DI CONSULENZA IN PROPRIETA' INDUSTRIALE**
**Viale Caldara, 43**
**I-20122 Milano(IT)**

(54) **Process for the production of aggregates starting from waste waters, powders and/or muds, and aggregates so obtained.**

(57) The invention concerns a process for the production of aggregates starting from clay and from waste waters, dusts and/or muds deriving from the purification of industrial and/or civil wastes. According to said process, the waste waters, dusts and/or muds are mixed in ratios from 1 to 70% by volume with clay (from 99% to 30% by volume), the mixture is homogenized in the most uniform possible way, and then treated at high temperature in a rotary furnace. A foamed or not foamed aggregate is obtained which gives positive results to all washout tests, not only in the granular form but also after breaking or grinding. If the initial wastes contain metals, particular antipollution advantages are obtained.

EP 0 170 212 A2

The present invention concerns a process for the production of aggregates with simultaneous recovery of industrial or civil wastes consisting of waste waters, dusts and/or muds. The invention also concerns the aggregates, foamed and not foamed, as obtained by using said process.

Processes for the production of aggregates are already known, said processes starting from a base material, at least a binder and additives with which fresh granules are formed and subsequently sent to a thermal treatment.

It is known that clay, shale, other natural materials as well as industrial wastes such as ashes coming from coal combustion, wastes coming from ore concentration and flocculation, etc. are used as base material. Still according to said known processes (see for instance the Italian patent application no.49115-A/80), the fresh granules are prepared starting from a base material which is sprayed with a binder, in case constituted by clay, saturated with water, and then sent to a slanting rotary granulation plate or to extruders. Afterwards the fresh granules are submitted to sintering in a rotary furnace.

As starting material the use of not better specified industrial wastes was foreseen, under the form of impalpable ash, dust or wastes from ore concentration and flocculation. It has however been noticed that said process is not suitable for making waste waters, dusts and/or muds inert and harmless, specially if they have high metal content, for which it is absolutely necessary that a safe and complete resistance to washout is obtained in order to ensure in any case that the
aggregates obtained are not themselves a source of
pollution.

Other processes of aggregating inorganic industrial
muds, even with high metal content, are known and
they essentially consist in mixing the base material
with appropriate dehydrating materials, hydraulic and/
or aggregate binders, and in granulating them. The
materials obtained, according to their composition,
can be sent to dump or, in particular cases, they can
also be used in the cement industry.

In case the production of light aggregates and in
particular foamed clay is foreseen, the techniques
comprise the preparation of granules starting from
clay, water and additives. Among the latter, combustible oils are specially used, as in the subsequent
thermal treatment they will be eliminated by combustion,
thus forming pores in the granules. At the same time
water and other volatile substances disappear under
the gaseous state, so that an expansion and an increase
in volume are obtained. The final result is constituted
by granules which are internally porous and externally
clinkerized, with apparent density in heap ranging
between 0.2 and 1 $Kg/dm^3$, with sizes ranging between
0.1 and 30 mm and having mechanic resistance to compression, determined according to UNI 7549, exceeding
3 $Kg/cm^2$, said granules being suitable for different
uses.

Also in the production of light aggregates, the use
of substances coming from industrial wastes was
proposed (see for instance the above said Italian patent application).

However, the known systems, have various drawbacks among which mainly the fact that the fresh granules have an insufficient mechanic resistance to be treated in a rotary furnace, and also the fact that often no expansion occurs during the thermal treatment, so that it is therefore not possible to obtain the production of foamed aggregates having equal properties as those of the commercially available foamed clays. In general, however, the technologies known up to now for the formation of aggregates with waste waters, muds and/ or dust coming from industrial and/or civil wastes by using clay or similar products are based on the concept of inserting the waste material into a kind of outer "skin" consisting of sinterized clay and made impermeable or substantially impermeable by means of appropriate processes. Said known techniques however do not assure that wastes, specially containing metals, are made completely harmless under conditions of prolonged washout, but above all they cannot be used with aggregates which may be employed in any possible use and therefore even in uses in which they are submitted to frequent washout, eventually even in crushed or ground condition, nor with foamed aggregates which present a certain fragility to compression stresses and which therefore can break, freeing the substances to be made harmless and therefore cpmpletely destroying , the advantageous ecological effects of the above mentioned technologies. Accordingly, an object of the present invention is to provide a process for the production of aggregates with the recovery of waste waters, dusts and/or muds coming from purification of industrial and/or civil wastes, eventually also containing metals, in order to
a final product absolutely inert as far as pollution
is concerned, even if submitted to prolonged washout
and also in crushed or ground condition, in particular an aggregate which gives positive results when
submitted to know washout tests carried out on aggregates under granular form obtained by the treatment
as well as on aggregates which underwent a subsequent
operation of breaking or even of grinding.

Another object of the invention is to provide a process
for the production of foamed aggregates, also allowing
to perform the recovery of waste waters, dusts and/or
muds from purification of industrial and/or civil
wastes, and obtaining a final product absolutely equal
to traditional  foamed clays.

Still another object of the invention is to provide a
process of the abovesaid type and with the abovesaid
characteristics which also allows to obtain considerable savings in respect to the technologies known
up to now used to produce foamed clays, said savings
being obtainable also thanks to the elimination or
reduction of said combustible oils and/or other expanding additives, on one side, and due to an energy
saving during the thermal treatment, on the other side,
when the material to be  ecovered contains organic substances.

To sumarize, the invention proposes a new process for the
industrial production of  foamed or not  foamed
aggregates, obtained in  an economically advantageous
way  using,  at least partly,  recovery material,
eventually  containing  metals, with the warranty
that said material, if polluting in itself, is comple-

0170212

tely made inert and harmless independently from its use
and the treatment to which the aggregates obtained are
submitted.

To achieve said objects, the invention concernes a
process for the industrial production of aggregates
starting from waste waters, dusts and/or muds of industrial and/or civil purification, characterized by
the steps of:

-mixing from 30 to 99% by volume of clay and from 70
to 1% by volume of said waste waters, dusts and/or
muds;

-adding if necessary water so as to reach at least 10%
humidity of the mixture;

-treating the mixture mechanically or by other physical
processes to obtain a high homogenization of the mixture;

-granulating and thermally treating the mixture at
temperatures ranging between 700°C and 1300° C.

In an absolutely new and surprising way, the product
obtained is completely inert to all washout tests,
not only under the conditions as it comes out of the
treatment according to the invention, but also if it
is submitted to subsequent operations, such as grinding
operations, which destroy the external protective layer
of the granule. Therefore, even in ground condition, the
product resists to washout tests, thus being completely
inert and harmless at least up to the level of crystal
lattice, notwithstanding the polluting materials contained
in the starting formulation.

As mentioned above, said dusts or muds can contain organic sub-
stances, in particular substances with high molecular weight and low

volatility, preferably with a molecular weight exceeding 80
and more preferably exceeding 300. It is the case for
example of residues of resins, rubbers, starch, cellulose,
dyes, proteins, hydrocarbons, etc.
Of course, type of mud can be used, in general inorganic muds and/or muds with partial organic contents
deriving from processes of purification of industrial
waters or waste waters. These can range from suspensions (having up to 99% in water) to solids (for example
filter pressed panels containing 30-50% in water). Muds
deriving from process water thickening (sedimentation)
(for example refinery muds) can be used, containing even
considerable amounts of organic substances (up to 60%
on the dry product). Other possibilities are given by
the utilization of flying ashes and heavy ashes deriving from coal combustion, for instance from thermo-
eletric power plants. These recovery materials can also
contain metals, generally under the form of oxides, the
content of which ranges from few p.p.m. to various %
(for instance from 0.01 to 80% by weight on the dry
product).
Besides calcium, silicium and alluminium (the first is
usually added to purification plants under the form of
lime to precipitate metal hydroxides, the second ones
are constituents of earth, sand and flocculating agents)
variable quantities of all metals can be present, in
particular iron, nickel, chromium, zinc, cadmium, cobalt and others, in amounts obviously varying according
to the process from which they come.
The process to obtain aggregates according to the invention comprises, as already said, a thorough mixing
of the clay with waste waters, dusts and/or muds, eventually with the addition of water and additives which
can consist of lime, calcium carbonate, volatile ashes
and heavy ashes, hydraulic binders, molding sands, smoke ·
winning powders, sand. These additives, in amount up to
30% by volume, are added because they can serve as fluxes if muds
are not sufficient and/or they can lower the water content in the
initial mixture and finally improve the workability. Cold mixing
is performed and then the mixture is submitted to a mechanical
or phisical process such as to obtain a maximum of homogeneity in
the treated mass. This processing can comprise a kneading
operation, a rolling step and extrusion or granulation
of the mixture, or other types of processing, for
instance squashing in apparatuses of pan mill type, or
also homogeneization with suspension in water, in order
to achieve the above mentioned object of the maximum possible homogeneity of the treated mass. At the
end, granules of the desired sized are obtained adapted
to be submitted to drying. This operation can be performed in the same furnace as that of the subsequent
cooking of the material as well as in appropriate driers
for instance of a rotary type, which work at temperatures ranging between 50 and 250°C.

After that the material is submitted to cooking in
furnace, preferably in rotary furnace with countercurrent or equicurrent flows and with temperatures
from 700°C to 1300°C.

The above defined process allows to obtain both foamed
or not foamed aggregates. In the first case a percentage of clay from 80% to 99% will be used with thermal
treatment between 1000°C and 1300°C and a composition
of the waste waters, dusts and/or muds will such as

-8-

to introduce a sufficient quantity of organic materials
to obtain expansion without the need of adding combustible oils and therefore with considerable economic
advantage. It has been calculated that it is sufficient
to use muds having at least 1% of organic substances,
with molecular weight exceeding 80, preferably exceeding
300. The obtained foamed aggregate, with specific weight
less than 0.8 kg/dm$^3$, has the same physical properties
as the commercially available foamed clay and, even
if the starting waters, muds or dusts contain metals,
it results completely harmless to washout tests.
Should the clay percentage be reduced to 30-80%, preferably to 40-70%, with waste waters, dusts and/or
muds from 70% to 20%, better from 60% to 30%, and containing metal oxides and/or metals from 0.01 to 80%
by weight on the dry product, and should the thermal
treatment be performed between 700°C and 1100° C,
a generally not foamed aggregate is obtained.
The mechanical properties of the aggregates thus obtained
obviously depend on the starting material used and
on the percentage of same in respect to the clay. In
particular, it will be possible to obtain aggregates
having ever decreasing density by adding to the mixture organic
substances serving as expanders, for example substances which can
also be obtained from industrial and/or civil wastes.
The products are characterized by the fact of containing
more than 0.1% by weight and preferably more than 5% by
weight in metals on the dry product, besides the clay
metal contribution, and have apparent density ranging
between 0.5 and 2 kg/dm$^3$. Moreover they present almost
inexistent washout harmfullness when checked by means of the presently known lixiviation tests.

The invention will be now illustrated by the following examples, given by indicative and not limiting purpose.


## EXAMPLE 1

An industrial test was performed using muds coming from purification processes of industrial wastes, in particular muds from chemical plants having 57.1%

$H_2O$ and 33.5% of organic substances.

The mud, after a thickening operation in appropriate filter press, had a humidity ranging between 45 and 75% and showed a high content of organic substances.

The mud was mixed with clay so as to have a homogeneous mass having the following composition:

|  |  |
|---|---|
| clay | 99% |
| mud | 1% |

water up to reach a mixture with 30% humidity.

Muds and clays were taken from measuring boxes capable

of giving the desired percentages. A part of the clay was mixed with the muds in a pre-filter where stones and slags were eliminated, and then the addition of base-clay was performed thus completing the mixture.

The latter was then treated in a sod breaker unit, in a mixing and homogenizing (pan mill) machine and in a mixer in which water was added  to reach the desired humidity degree.

When out, the mixture was placed in a misuring box from which suitable amounts were drawn for subsequent treatment in a train of rolls, in another mixing device and finally in a kneading machine with extrusion head (die) operating with degassing step. At the end of the extrusion, which was performed at the higher pressure the greatest was the mud content, the completely homogenized mixture was sent to thermal treatment to be dried and then cooked at approximately 1150°C. Said thermal treatment was carried out in a rotary furnace thus obtaining a foamed aggregate having apparent density of 0.31 kg/dm$^3$ and physical properties, in particular a pressure resistance, identical to the ones of foamed clay in the trade.

EXAMPLE 2

The same kind of mud of example 1 was used by mixing it with clay in different ratios, but following the same procedure. The starting mixtures had the following compositions:

| | | | |
|------|--------|--------|--------|
| clay | 96.60% | 93.72% | 91.00% |
| mud  | 3.40%  | 6.28%  | 9.00%  |

water up to reach approximately 30% humidity.
The foamed aggregates obtained had an apparent density of 0.31 kg/dm$^3$ and 0.35 kg/dm$^3$ and 0.31 kg/dm$^3$ respectively. The presence of small size grit, due to granules crumbling, resulted to be within the limits of normal production, as in the previous example.

EXAMPLE 3

The mud of the preceding examples was used additioned with inorganic mud coming from a mechanical plant and having 22.1% of H$_2$O.
The mud was mixed with clay as in Example 1 so as to have a homogeneous mixture having the following composition:

clay                              80%

mud from chemical plant    2%

mud from mechanical plant 18%

eventually water up to reach 30% humidity.

The product after drawing and drying was thermally treated in a rotary furnace obtaining a foamed clay with apparent density of 0.33 kg/dm$^3$.

EXAMPLE 4

A tannery mud was used having 77.5% of $H_2O$ and 10.3%

of organic substances.

The raw granules had the following composition:

clay                 95.3%

mud                  4.7%

The product submitted to the usual process, gave a foamed aggregate with apparent density corresponding to 0.31 kg/dm$^3$, good characteristics both of thermal isolation and of granule resistance.

In this case, too, as in all the previous ones, foamed aggregates were obtained having behaviour and characteristics equal to those of normally produced foamed clay, said aggregates being obtained with energy savings due to the elimination of combustible oil, and being able to overcome elution tests.

EXAMPLE 5

An industrial test was carried out using muds coming from industrial operations and containing mineral oils.

The mud was mixed with clay so as to have a homogeneous mass with the following composition:

clay            70% by volume

mud             30% by volume

eventually water up to reach a mixture having 30% humidity.

muds and clays were treated as in example 1 except for the fact that the thermal treatment (drying and then cooking) was performed up to a temperature of 800°C.

The product obtained resulted to be an aggregate perfectly resistant to usual washout tests, having good mechanic resistance and apparent density of approximately 0.75 kg/dm$^3$.

EXAMPLE 6

The same kind of mud as in example 5 was used mixing it with clay and following the same procedure as that of example 5, but with the following ratios:

     clay      30% by volume

     mud       70% by volume

eventually water up to reach a mixture having approximately 30% humidity. The aggregate obtained presented the same characteristics of resistance to washout as the one of example 5, an apparent density of approximately 1.25 kg/dm$^3$ and higher mechanic resistance.

EXAMPLE 7

A dust with a high content in heavy metals coming from electrofilters was used.

The dust was treated as in example 5, mixing it with clay in the following ratios:

     powder from smokes              30% by volume

     clay                           70% by volume

eventually water up to reach 30% humidity in the mixture.

The obtained aggregate had apparent specific weight of approximately 0.75 kg/dm$^3$ with perfect resistance to washout and good characteristics of mechanic resistance.

-13

0170212

EXAMPLE 8

Following the same procedure and using the same dust as in example 7, aggregates were obtained having apparent specific weight of approximately 1.25 $kg/dm^3$ and resistant to washout, starting from an initial mixture having the following composition:

| | |
|---|---|
| dust | 70% by volume |
| clay | 30% by volume |

eventually water up to reach approximately 30% humidity for kneading and extruding.

EXAMPLE 9

Aggregates were obtained starting from the following materials:

| | |
|---|---|
| inorganic mud coming from chemical plant | 40% |
| mud with high content in organic substances coming from textile plant | 10% |
| clay | 50% |

eventually water up to obtain sufficient humidity for kneading and extruding.

In this case the result was an aggregate which was obtained with energy savings due to the presence of organic substances and which, as in any case all the aggregates of the present invention, overcome the elution tests, in particular the tests according to:

a) Law region of Lombardia (Italy) No.94/80-enclosure 3

b) "Environmental Protection Agency-EPA Report 1980" both under granular form and after crushing and/or grinding of granules, substantially giving the same results.

CLAIMS

1. A process for the industrial production of aggregates starting from clays and waste waters, dusts and/or muds of industrial and/or civil purification plants, characterized by the steps of:

-mixing from 99% to 30% by volume of clay and from 1 to 70% by volume of waste waters, dusts and/or muds coming from civil and/or industrial wastes;

-adding if necessary water so as to reach at least 10% humidity of the mixture;

-treating the mixture mechanically or by physical processes such as to obtain a high homogenization of the mixture;

-granulating and thermally treating the mixture at temperatures ranging between 700°C and 1300°C.

2. A process according to claim 1, characterized in that said homogenization step comprises an extrusion step of the mixture through a dye.

3. A process according to claim 1, characterized by the addition of a percentage up to 30% by volume of additives consisting of lime, calcium carbonate, hydraulic binders, molding sands, smoke powders and/ or sand.

4. A process according to claim 1, characterized in that said thermal treatment comprises a treatment in rotary furnace with equicurrent flows.

5. A process according to one of the claims 1 to 4 for the industrial production of foamed aggregates, characterized in that clay is used in a percentage varying from 99% to 80% and in that the thermal treatment is carried out in a furnace between 1000° and 1300° C.

6. A process according to claim 5, characterized in that muds having at least 1% of organic substances are used.

7. A process according to claim 6, characterized in that the molecular weight of said organic substances exceeds 80.

8. A process according to claim 7, characterized in that the molecular weight of said organic substances exceeds 300.

9. A process according to claim 1, wherein said waste waters, dusts and/or muds of industrial and/or civil purification plants contain metal oxides and/or metals in a percentage ranging from 0.01 to 80% by weight on the dry product, characterized in that 30% to 80% by volume of clay and 70 to 20% by volume of said waste waters, dusts and/or muds are mixed, and in that said thermal treatment is carried out at temperatures ranging between 700°C and 1100°C.

10. A process according to claim 9, characterized in that clay from 40 to 70% by volume and waste waters, dusts and/or muds from 60 to 30% by volume are used.

11. A foamed aggregate as obtained by means of the process according to at least one of the claims 5 to 8, characterized in that it has physical properties corresponding to the ones of the foamed clay in the trade.

12. A foamed aggregate according to claim 11, characterized in that it contains at leats 0.01% of the sum of one or more of the following metals: chromium, zinc, nickel, copper, lead, cadmium, iron, cobalt, manganese, antimonium, tin, and in that it has an apparent specific weight lower than 0.8 kg/dm$^3$.

13. An aggregate as obtained by means of the process according to one of the claims 9 or 10, characterized in that it contains, besides what already present in the clay, more than 0.1% by weight of at least one metal, in that it has a specific weight ranging from 0.5 to 3 kg/dm$^3$ and in that it resists to washout tests even in crushed condition.

14. An aggregate according to claim 13, characterized in that it contains at least 1% by weight of the sum of one or more of the following metals: chromium, zinc, nickel, copper, lead, cadmium, iron, cobalt, manganese, antimonium, tin, besides the metals already contained in the clay.